# EUROPÄISCHE PATENTSCHRIFT

(11) **EP 0 911 835 B1**
(45) Veröffentlichungstag und Bekanntmachung des Hinweises auf die Patenterteilung: **23.12.2009**
(21) Anmeldenummer: 98119709.8
(22) Anmeldetag: 19.10.1998
(51) Int. Cl.: G21C 19/307, B01D 61/44

(54) **Verfahren und Vorrichtung zum Abtrennen von 7Li aus dem Primärkühlkreis eines Kernkraftwerks**
Method and device for separating 7Li from the primary coolant loop of a nuclear power plant
Méthode et dispositif pour séparer du Lithium-7 du circuit primaire du réfrigérant d'une centrale nucléaire

(30) Priorität: 24.10.1997 DE 19747077
(43) Veröffentlichungstag der Anmeldung: 28.04.1999
(73) Patentinhaber: EnBW Kraftwerke AG, 76661 Philippsburg (DE)
(72) Erfinder: Rühle, Wilfried Dr., 69214 Eppelheim (DE); Enkler, Günther, 68753 Waghäusel (DE); Bolz, Michael Dr., 76689 Karlsdorf (DE)
(74) Vertreter: Jany, Peter

(56) Entgegenhaltungen:
- EP-A- 0 531 999
- DE-A- 2 326 152
- DE-A- 2 830 972

## Beschreibung

Die Erfindung betrifft ein Verfahren und eine Vorrichtung zum Abtrennen von ⁷Li aus dem Primärkühlkreis eines Kernkraftwerks, insbesondere eines Druckwasserreaktors.

In Kernkraftwerken wird mittels der neutroneninduzierten Kernspaltung Energie gewonnen. Das in dem Primärkühlkreis enthaltene Wasser dient dabei sowohl als Kühlmittel zur Abführung der Reaktionswärme als auch als Moderator zum Thermalisieren der für die Aufrechterhaltung der Kettenreaktion erforderlichen Neutronen.

Zur Beeinflussung der Zahl der thermalisierten Neutronen und damit zur Regelung der Leistung des Reaktors durch Beeinflussung der Kettenreaktion werden dem Kühlwasser neutronenentziehende Substanzen beigegeben. Eine bevorzugte Substanz zur Bindung der Überschußreaktivität ist das neutronenphysikalisch wirksame Isotop ¹⁰B, das in Form von an ¹⁰B angereicherter Borsäure (B(OH)₃) im Primärkühlkreis vorliegt. Dieses Isotop hat einen großen Neutroneneinfangquerschnitt.

Die Zugabe von Borsäure hat jedoch den Nachteil, daß im Primärkühlkreis der pH-Wert abgesenkt wird. Um den pH-Wert in den zulässigen Wertebereich anzuheben und die pHabsenkende Wirkung der Borsäure zu kompensieren, wird dem Primärkühlkreis isotopenreines ⁷Li in Form von LiOH zugegeben. Die nachfolgenden Ausführungen gelten daher, soweit von ⁷Li die Rede ist, sinngemäß gleichzeitig für LiOH.

Aufgrund der Tatsache, daß die Aktivität in einem Reaktor nach einer Beschickung mit neuem Kernbrennstoff während des ca. einjährigen Zyklus abnimmt, ist zu Beginn eines Zyklus eine höhere Borsäurekonzentration als am Zyklusende erforderlich, um die Überschußreaktivität zu binden. Die Borsäurekonzentration muß daher während der Zyklusdauer von ca. 1200 ppm auf ca. 0 ppm reduziert werden. Damit der zulässige pH-Bereich bzw. die maximal zulässige Lithiumkonzentration eingehalten wird, muß begleitend auch die Lithiumkonzentration beeinflußt werden. Dabei gibt es unterschiedliche Lithium-Bor-Fahrweisen eines Reaktors.

So kann beispielsweise über die Zyklusdauer der pH-Wert konstant gehalten werden, wobei die Borsäure- und die Lithiumkonzentration während des Zyklus gleichmäßig abnehmen. Eine andere Variante besteht darin, daß während eines Großteils des Zyklus zunächst bei konstanter Lithiumkonzentration die Borsäurekonzentration reduziert und erst gegen Ende des Zyklus auch die Lithiumkonzentration verringert wird. Die Lithiumhydroxidkonzentration liegt in der Regel zu Beginn eines Zyklus zwischen 1,5 und 2,5 ppm und gegen Ende des Zyklus zwischen 0 und 1 ppm. Daraus ergibt sich das Erfordernis, während eines Zyklus nicht nur die Borsäurekonzentration, sondern auch die Lithiumhydroxidkonzentration zu reduzieren.

Hinzu kommt, daß aufgrund der Neutroneneinfangreaktion des ¹⁰B der Reaktor im Betrieb selbst ⁷Li produziert, das ebenfalls entzogen werden muß.

Aufgrund der neutronenphysikalischen und chemischen Anforderungen an einen Reaktor ist der gebräuchliche ⁷Li-Haushalt während der Zyklusdauer einer Brennstabbeschikkung daher wie folgt.
a) Zu Beginn eines Zyklus wird der Primärkühlkreis mit auf dem Markt erworbenen Lithium beladen, um die ⁷Li-Anfangskonzentration der zu diesem Zeitpunkt hohen Borkonzentration anzupassen.
b) In der ersten Zyklushälfte wird durch den Neutroneneinfang des ¹⁰B das ⁷Li im Überschuß produziert. Dieses erbrütete ⁷Li muß ebenso wie das aufgrund der abnehmenden Borsäurekonzentration überschüssige ⁷Li dem Primärkühlkreis entzogen werden. Dabei ist es erstrebenswert, die ⁷Li-Konzentration im Kühlmittel möglichst konstant zu halten, damit sich der pH-Wert und folglich das Redoxpotential nicht oder nicht diskontinuierlich ändern, wodurch die Mobilisierung radioaktiver Korrosionsprodukte verstärkt würde.
c) In der zweiten Zyklushälfte ist zur Absenkung der Borsäurekonzentration eine hohe Kühlmittelaustauschrate erforderlich. Dabei geht bei den nach dem Stand der Technik eingesetzten Methoden ⁷Li in der Kühlmittelaufbereitung verloren. Dieses verlorene ⁷Li wird wiederum durch hinzugekauftes, neues ⁷Li ersetzt.
d) Druckwasserreaktoren werden auch zur kurzfristigen Abdeckung von Strombedarfsspitzen eingesetzt, insbesondere in Ländern mit hohem Anteil der Kernenerie an der Stromerzeugung. Hierzu muß die Reaktivität eines Reaktors in kurzer Zeit verändert werden. Reaktivitätserhöhung kann durch Erniedrigen der Borsäurekonzentration erreicht werden, wobei zur Konstanthaltung des pH-Wertes in gleichem Maße die Lithiumkonzentration erniedrigt werden muß. Umgekehrt kann die Reaktivität des Reaktors durch Erhöhen der Borsäurekonzentration erniedrigt werden, wobei auch hier zur Konstanthaltung des pH-Wertes in gleichem Maße die Lithiumkonzentration erhöht werden muß. Diese Betriebsweise, bei der die Reaktivität in kurzer Zeit erhöht oder erniedrigt wird, wird als Lastfolgebetrieb bezeichnet.

Nach dem Stand der Technik werden zum Entzug des ⁷Li Ionenaustauschfilter eingesetzt. Zusammen mit diesen Ionenaustauschern gelangt das ⁷Li letztendlich in den radioaktiven Abfall. Hierdurch entstehen parallel zu den hohen Zukaufkosten ganz erhebliche Entsorgungskosten. Mit Lithium beladene Ionenaustauscher dienen als ionale und partikuläre Hauptreinigungsfilter in dem Primärkühlkreis. Es ist erforderlich, das im intermittierenden Betrieb betriebene Lithiumentzugsfilter auszutauschen, wenn es seine Lithiumbeladungsgrenze erreicht hat, und es dann als Hauptreinigungsfilter weiter zu betreiben. Das vorherige Hauptreinigungsfilter wird dabei verworfen, obwohl es seiner Aufgabe als Hauptreinigungsfilter noch gerecht werden könnte. Durch die Lithiumsättigung der Ionenaustauscher werden die Entsorgungskosten somit weiter erhöht.

Ferner ist es in Fällen, in denen die Harze des Hauptreinigungsfilters beispielsweise wegen ihrer chemischen Erschöpfung, ausgetauscht werden müssen, erforderlich, auch das als Lithiumentzugsfilter benutzte Mischbettfilter mit neuem, hinzugekauften Lithium bis zur Sättigung zu beladen und dann als Hauptreinigungsfilter für die Kühlwasserreinigung einzusetzen. Die Harzfüllung des alten Hauptreinigungsfilter wird verworfen, das Filter mit neuen Filterharzen gefüllt und dann als Lithiumentzugsfilter verwendet.

Die nach dem Stand der Technik eingesetzten Ionenaustauschfilter sind daher zusammengefaßt sehr unwirtschaftlich, da ständig ⁷Li zu hohen Kosten hinzugekauft und mit sehr erheblichen Entsorgungskosten als radioaktiver Abfall entsorgt wird. Diese Verfahrensweise wurde von der Fachwelt für erforderlich gehalten, um eine zuverlässige Regelung der ⁷Li-Konzentration zu erzielen.

Im Stand der Technik wurden große Anstrengungen unternommen, um die durch das ⁷Li verursachten, erheblichen Kosten zu reduzieren. In einer in diesem Zusammenhang vor kurzem erstellten Studie der Energieversorgungsunternehmen wurden Möglichkeiten zur Kosteneinsparung untersucht. Im Ergebnis wurde vorgeschlagen, unter Anwendung der bekannten Ionenaustauscher das Management der Lithiumdosierung zu optimieren. Auf diese Weise lassen sich jedoch die oben beschriebenen, in der bisher eingesetzten Technologie begründeten Nachteile nicht entscheidend reduzieren.

Aus dem Dokument DE-OS 2830972 ist das Abtrennen von ⁷Li aus einem Reaktorkühlmittel mittels eines Membranelektrolyseverfahrens bekannt. Bei der Membranelektrolyse findet alternierend ein Ionen- und Elektronentransport statt. Nachteilig bei der Membranelektrolyse ist die an den innen liegenden Elektroden auftretende Gasentwicklung, so daß dementsprechend eine Entgasung der Produktkammer erforderlich ist. Ferner ist nachteilig, daß die Zugabe von Additiven erforderlich sein kann und daß die in der zu reinigenden Flüssigkeit enthaltenen Spurenelemente auf den Elektroden abgeschieden werden, die dort Passivierungsschichten bilden, die Elektroden angreifen oder beim Umpolen ausfallen können.

Der Erfindung liegt unter Berücksichtigung dieses Standes der Technik die Aufgabe zugrunde, ein Verfahren und eine entsprechende Vorrichtung zu schaffen, mit denen es möglich ist, ⁷Li aus dem Primärkühlkreis zu entfernen, ohne dabei radioaktiven Abfall zu erzeugen, und das abgetrennte ⁷Li in relativ konzentrierter Form für den späteren Bedarf zu lagern, um es im Bedarfsfall wieder dem Primärkühlkreis zusetzen zu können.

Die erfindungsgemäße Lösung bei einem Verfahren zum Abtrennen von ⁷Li aus dem Primärkühlkreis eines Kernkraftwerks, insbesondere eines Druckwasserreaktors, besteht darin, daß Kühlwasser aus dem Primärkühlkreis entnommen und durch ein Elektrodialysemodul geleitet wird, in dem ⁷Li mittels Elektrodialyse aus Kühlwasser abgetrennt und aus dem Elektrodialysemodul austretendes Diluat in den Primärkühlkreis gemäß den vorliegenden Ansprüchen zürückgespeist wird.

Im Rahmen der vorliegenden Erfindung wurde überraschenderweise festgestellt, daß die außerordentlich schwierigen Anforderungen bei einem Kernkraftwerk hinsichtlich Zuverlässigkeit, Betriebssicherheit und Genauigkeit der Regelung der ⁷Li-Konzentration mit dem Verfahren der Elektrodialyse gelöst werden können, ohne daß, wie von der Fachwelt bisher für erforderlich gehalten wurde, ständig große Mengen ⁷Li hinzugekauft und als radioaktiver Abfall verworfen werden müssen.

Unter Elektrodialyse versteht man einen Prozeß, bei dem unter Einfluß eines elektrischen Felds mit Hilfe ionenselektiver Membranen Ionen aus einer Lösung entfernt werden. Ein Elektrodialyseverfahren ist dadurch gekennzeichnet, daß die Stromleitung nur über einen Ionentransport erfolgt. Eine Entgasung der Produktkammer ist nicht erforderlich, da keine begleitende Gasentwicklung eintritt. Die Elektrodialyse kann ohne Zusatz von Additiven durchgeführt werden, und Spurenelemente werden mit dem an Lithium abgereicherten Primärkühlmittel in den Reaktor zurückgeführt.

Im Fall der Membranelektrolyse erfolgt die Dissoziation von Wasser bedingt durch eine Redoxreaktion an den Elektroden. Man beobachtet unter Energieverbrauch die Bildung gasförmiger Nebenprodukte. Bei einer Elektrodialyse mit bipolaren Membranen erfolgt die Bildung von H⁺ und OH⁻ bedingt durch eine einfache reversible Dissoziation von Wasser. Dabei ist keine Redoxreaktion am Separationsschritt beteiligt.

Die bei der Elektrodialyse eingesetzten ionenselektiven Membranen haben vorzugweise eine hohe Ladungsdichte und bestehen heutzutage in der Regel aus Kunststoffilmen, in die ionische Gruppen eingebettet sind. Je nach Ladung der Membranen unterscheidet man Kationenaustauscher- und Anionenaustauscher-Membranen. Die wesentlichen Anforderungen an ionenselektive Membranen sind:
1. Hohe Ionenselektivität, d.h. kationenaktive Membranen sollen möglichst weitgehend undurchlässig für Anionen sein und umgekehrt.
2. Hohe chemische Selektivität, d.h. hinsichtlich der Atom- bzw. Molekülart, so daß nur bestimmte Substanzen (z.B. OH⁻) die Membran durchdringen und andere (z.B. B(OH)₄⁻) zurückgehalten werden.
3. Geringer elektrischer Widerstand, d.h. der Transport der Gegenionen durch die Membran hindurch soll mit möglichst geringem Aufwand an elektrischer Energie durchführbar sein.
4. Hohe mechanische Festigkeit, d.h. die Membran soll in gewissem Umfang flexibel und bruchfest sein und somit eine lange Lebensdauer haben.
5. Hohe chemische Beständigkeit, d.h. widerstandsfähig gegen Hydrolyse und oxydative und andere chemische Einflüsse.

Die Grundeinheit einer Elektrodialysieranlage besteht aus einer nach dem Plattenwärmeaustauscher- oder auch Filterpressenprinzip aufgebauten Stapelzelle. Bevorzugt sind Mehrfachzellen; das sind Zellen, in denen einer Zelle, in der die zu behandelnde Flüssigkeit strömt, alternierend eine Zelle folgt, in der die Flüssigkeit strömt, die die abzutrennende Substanz aufnehmen soll. Die Elektrodenzellen werden vorzugsweise für sich getrennt gespült. Weitere Details zur Elektrodialyse sind der Fachliteratur, beispielsweise der Veröffentlichung von K. Wucherpfennig in Chemie-Technik 7 (1975), 253, auf die Bezug genommen wird, zu entnehmen.

Überraschenderweise hat sich im Rahmen der Erfindung herausgestellt, daß durch die Anwendung der Elektrodialyse zum Abtrennen von ⁷Li aus dem Primärkühlkreis Ziele erreicht werden, um die sich die Fachwelt schon lange bemüht hat. Es ist mit diesem Verfahren möglich, das ⁷Li bzw. das Lithiumhydroxid in aufkonzentrierter Form abzutrennen, zu speichern und im Bedarfsfall dem Primärkühlkreis wieder zuzusetzen. Damit sind erhebliche Vorteile in verfahrenstechnischer Hinsicht sowie in bezug auf die Betriebskosten des Kraftwerks verbunden.

Um dabei besonders gute Ergebnisse hinsichtlich der Lithiumabtrennung, der Betriebssicherheit und der Kostenminimierung zu erhalten, werden bevorzugt die nachfolgenden Maßnahmen einzeln oder in Kombination miteinander eingesetzt.

Nach einem vorteilhaften Merkmal kann vorgesehen sein, daß das Elektrodialysemodul bipolare Membranen aufweist. Ein wesentliches Merkmal der Elektrodialyse mit bipolaren Membranen ist die Kombination der konventionellen Elektrodialyse bei der Abtrennung eines Salzes mit der elektrodialytischen Wasserdissoziation bei der Überführung des Salzes in seine korrespondierende Säure und Base. Die effektivste Ausführung der bipolaren Membrantechnik ist der sogenannte Drei-Kammer-Stapel.

Weitere vorteilhafte Merkmale können darin bestehen, daß das Elektrodialysemodul eine Mehrfachzelle mit alternierend geschalteten anionen- und kationenselektiven Membranen umfaßt. Als besonders vorteilhaft haben sich im Rahmen der Erfindung zur Abtrennung von ⁷Li aus dem Primärkühlkreis Membranen herausgestellt, die eine mikroheterogene und/oder eine Interpolymermorphologie aufweisen. Damit soll erreicht werden, daß die mechanischen und elektrochemischen Eigenschaften entkoppelt eingestellt werden können. Dementsprechend erfolgt der Aufbau einer Membran aus einem Matrixpolymer, einem Gewebe oder einem Binder, sowie aus einem Polyelektrolyten bzw. einem Ionomer. Dabei wird entsprechend des Grades der Heterogenität der Ionenaustauschermembran zwischen homogenen Membranen, Interpolymermembranen, mikroheterogenen Pfropf- oder Blockcopolymermembranen und heterogenen Membranen unterschieden.

Das polymere Netzwerk kann dabei unterschiedlich aufgebaut sein, um für die meisten Anwendungsfälle ausreichend gute elektrische und mechanische Eigenschaften aufzuweisen. Als ladungsneutrales Matrixpolymer wird üblicherweise Polyvinylchlorid und Polyacrylat eingesetzt. Als weitere Matrixpolymere können noch Polyethylen, Polypropylen oder Polysulfon verwendet werden, wobei nur diese eine chemische Langzeitstabilität unter alkalischen Bedingungen aufweisen.

Bevorzugt wird somit beim erfindungsgemäßen Verfahren als Anionenaustauschermembran eine solche auf Basis von Polyethylen, Polypropylen, Polyetherketon, Polysulfon, Polyphenyloxid- und/oder -sulfid eingesetzt.

Die ionenleitenden Polyelektrolyte einer Anionenaustauschermembran bestehen aus einem Netzwerk mit einer positiven Überschußladung und beweglichen, negativ geladenen Gegenionen. Das Festionengerüst kann durch schwach basische Amino- und Iminogruppen aufgebaut sein, wie auch aus stark basischen Immonium- und quartären Ammonium-Gruppen:

-NH₃⁺ -NH₂R⁺ -NR₃⁺ =NR₂⁺

Besonders bevorzugt weist die im erfindungsgemäßen Verfahren eingesetzte Anionenaustauschermembran Austausch gruppen aus alkyliertem Polyvinylimidazol, Polyvinylpyridin und/oder aklyliertem 1,2-Diazabicyclo[2.2.2.]octan auf.

Besonders geeignete Membranen sind in der DE 4026154 A1, DE 4211266 A1 und DE 4211267 A1 beschrieben.

Der Typ und die Konzentration an Festionen bestimmt hauptsächlich die Permselektivität und den elektrischen Widerstand der Membran, kann sich aber auch auf die mechanischen Eigenschaften, insbesondere auf die Quellung der Membran aufgrund der Konzentration an Festionen auswirken. Die stark basische quartäre Ammonium-Gruppe ist bei allen pH-Werten dissoziert, während die primäre Ammonium-Gruppe nur schwach dissoziert ist. Aus diesem Grund werden meistens quartäre Ammonium-Gruppen in kommerziellen Anionenaustauschermembranen eingebaut, außer, daß eine Membran mit bestimmten Eigenschaften hergestellt werden soll.

Systeme auf Basis von chlormethyliertem Polystyrol, Styrol/Divinylbenzol-Copolymeren und Styrol/Butadien-Copolymeren unter nachträglicher Quarternisierung mit Trimethylamin finden den häufigsten Einsatz.

Die chemische Langzeitstabilität der Anionenaustauscher-membranen kann nur durch folgende Faktoren beeinflußt werden: Zerstörung der Polymermatrix (unzureichende Stabilität des Matrix- oder Interpolymers in alkalischer Lösung), morphologische Veränderung des Systems Festionengerüst/Polymermatrix oder chemischer Abbau der Festionen unter alkalischen oder oxidativen Bedingungen.

Zur Auswahl einer Anionenaustauschermembran können die elektrochemischen, die mechanischen und die chemischen Eigenschaften in gleicher Weise optimiert sein. Bezüglich der mechanischen Eigenschaften kann das Gewebe aus temperatur-, alkali- und oxidationsstabilen Polymeren (Polypropylen, Polyethylen, Polyetherketon) bestehen und als Festladung chemisch stabiles quartäres Ammoniumsalz (Vinylimidazol, 4,4'-Diaza-bicyclo[2.2.2]-octan aufweisen. Geeignete Membranen sind in der DE-A 4421126 beschrieben.

Zur Durchführung des erfindungsgemäßen Verfahrens werden die Elektrodialyse-Zellen ohne Einschränkung der Allgemeinheit beispielsweise mit Stromdichten von 1 bis 150 mA/cm², bevorzugt mit 2 bis 20 mA/cm² betrieben. Bei den Elektrodialyse-Zellen zur Durchführung des erfindungsgemäßen Verfahrens können handelsübliche Kationen- und Anionenaustauschermembranen verwendet werden. Beispiele für Kationenaustauschermembranen sind NEOSEPTA^{(R)} CL-25 T, NEOSEPTA^{(R)} CMS (Tokuyama Soda Co., Japan) und SELE-MION^{(R)} CMV (Asahi Glass Co., Japan). Beispiele für Anionenaustauschermembranen sind NEOSEPTA^{(R)} ACH-45 T, NEO-SEPTA^{(R)} AMS, SELEMION^{(R)} AMV, SELEMION^{(R)} AMP und SELE-MION^{(R)} AMF. Bei den Elektrodialyse-Zellen zur Durchführung des erfindungsgemäßen Verfahrens wird der Anodenraum durch eine Kationenaustauschermembran und der Kathodenraum durch eine Anionenaustauschermembran begrenzt. Ohne Einschränkung der Allgemeinheit werden hierfür bevorzugt Austauschermembranen vom Typ NEOSEPTA^{(R)} CMX und AMX der Firma Tokuyama Soda Co., Japan, verwendet. Ohne Einschränkung der Allgemeinheit werden für den Zellstappel bevorzugt Anionenaustauschermembranen vom Typ NEO-SEPTA^{(R)} ACM, NEOSEPTA^{(R)} AFN oder NEOSEPTA^{(R)} AM-3 verwendet und Kationenaustauschermembranen vom Typ NEO-SEPTA^{(R)} CMS oder NEOSEPTA^{(R)} CM-2.

Bei den NEOSEPTA^{(R)}-Membranen der Firma Tokuyama Soda Co., Japan, handelt es sich um mikroheterogene Ionenaustauschermembranen vom Typ Interpolymermembran. Das Grundgerüst wird nach der sogenannten "paste method" aus 100 Teilen PVC-Pulver, 90 Teilen F-Monomer, 10 Teilen Divinylbenzol, 30 Teilen Dioctylphthalat und 1 Teil Benzoylperoxid durch Beschichten eines PVC-Netzes hergestellt. Als F-Monomer werden Styrol bei Kationenaustauschermembranen, Chlormethylstyrol, 4-Vinylpyridin oder 2-Methyl-5-vinylpyridin bei Anionenaustauschermembranen verwendet. Bei den Membranen der Firma Asahi Glass handelt es sich um quasihomogene Ionenaustauschermembranen. Diese werden aus einem Styrol-Vorpolymerisat und einem Styrol/Butadien-Copolymer nach Zusatz von Divinylbenzol auf einem PVC-Netz hergestellt. Die Funktionalisierung erfolgt entweder durch Sulfonierung (CMV) oder durch Chlormethylierung und anschließende Quaternisierung (AMV).

Als bipolare Membranen können beispielsweise Laminate zweier ionenselektiver Filme entgegengesetzter Polarität verwendet werden, die durch Zusammenlegen handelsüblicher Kationen- und Anionenaustauschermembranen erhältlich sind, oder funktionalisierte Kompositfilme mit kationen- und anionen-selektiven Eigenschaften beiderseits der Membran. Zu deren Herstellung wird auf den Artikel "Development of Bipolar Membranes" von B. Bauer, F.J. Gerner und H. Strathmann in Desalination 68 (1988) 279-292 verwiesen. Weitere vorteilhafte Membranen sind in der Veröffentlichung "Anion-Exchange Membranes with Improved Alkaline Stability von B. Bauer, H. Strathmann und F. Effenberger in Desalination 79 (1990) 125 beschrieben.

Die Wirksamkeit des erfindungsgemäßen Verfahrens kann erhöht werden, wenn der pH-Wert in den unterschiedlichen Zellen durch Zusatz von Säure bzw. Lauge optimiert wird. Durch Verwendung von Komplexbildnern lassen sich störende Ionen, insbesondere radioaktive, derart beeinflussen, daß sie in die jeweils gewünschten Stoffströme übertreten, also beispielsweise in das Lithium-Konzentrat oder in die an Lithium abgereicherte Borsäurefraktion. Zur Erhöhung der Trennwirksamkeit, insbesondere in Lösungen mit niedrigen Konzentrationen, können die Zellen zwischen den Membranen mit Ionenaustauschern (Kationen-, Anionen- oder Mischbettaustauscherharzen) gefüllt werden. Die Erfindung ist aber auch ohne Ionenaustauscher vorteilhaft verwendbar und kommt mit wenigen Kreislaufströmen aus.

Die Vorteile der Erfindung bestehen darin, daß mittels der Elektrodialyse das überschüssige ⁷Li auf physikalischem Wege aus dem Primärkühlkreis entfernt und isoliert werden kann, das Verfahren im Gegensatz zum Ionenaustausch kontinuierlich abläuft und dadurch eine sehr konstante ⁷Li-Konzentration im Kühlmittel eingehalten werden kann, kein Sekundärabfall entsteht und die ⁷Li-Rückgewinnung zu erheblichen Einsparungen bei Chemikalien- und Entsorgungskosten führt. Es können Produkte in hoher Reinheit und Konzentration erhalten werden, z.B. ⁷Li mit mehr als 10000 mg/kg und Bor (einschließlich des ¹⁰B-Anteils) mit mehr als 7000 mg/kg, wobei ⁷Li und Bor nicht gleichzeitig entzogen werden müssen, sondern nach Wahl abtrennbar sind.

Die folgenden Ausführungsbeispiele der Erfindung lassen weitere vorteilhafte Merkmale und Besonderheiten erkennen, die anhand der schematischen Darstellung in den Zeichnungen im folgenden näher beschrieben und erläutert werden.

Es zeigen:
- Fig. 1: ein Prinzipbild einer erfindungsgemäßen Elek- trodialyseanlage,
- Fig. 2: ein schematisches Bild der Vorgänge in dem Elektrodialysemodul,
- Fig. 3: ein Schema zu dem Elektrodialysemodul,
- Fig. 4: ein Elektrodialysemodul mit umgepolter Span- nung,
- Fig. 5: eine erfindungsgemäße Vierkammer-Elektrodia- lyse,
- Fig. 6: eine erfindungsgemäße Elektrodialyse mit bipo- laren Membranen in Dreikammer-Konfiguration,
- Fig. 7: eine erfindungsgemäße Elektrodialyse mit bipo- laren Membranen in Zweikammer-Konfiguration,
- Fig. 8: Einzelheiten zu einer ersten Ionenaustauscher- membran und
- Fig. 9: Einzelheiten zu einer zweiten Ionenaustauscher- membran.

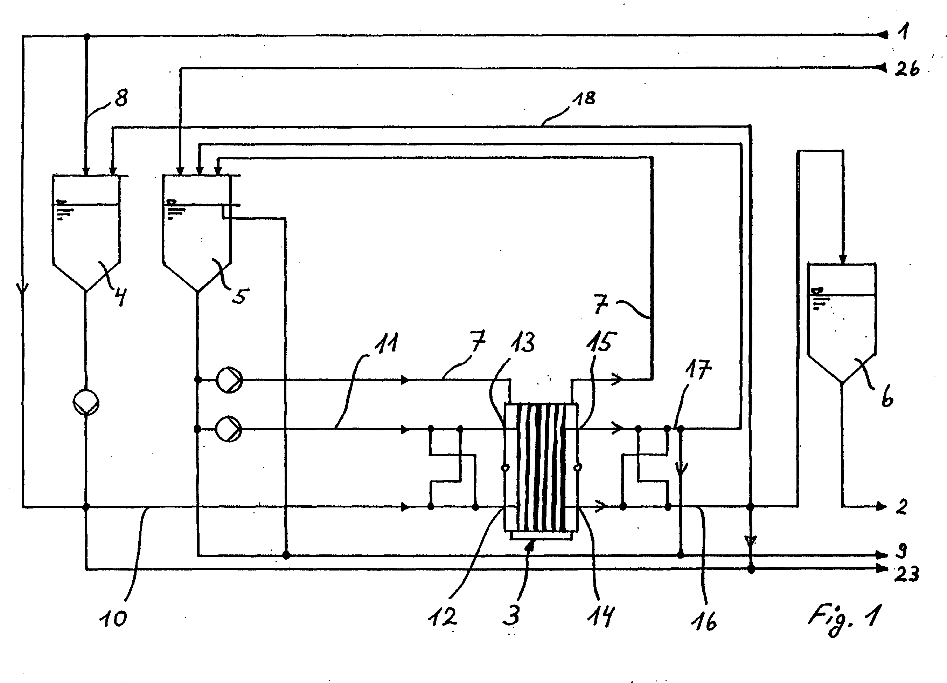

Die Fig. 1 zeigt eine erfindungsgemäße Vorrichtung zur Durchführung des erfindungsgemäßen Verfahrens zum Abtrennen von ⁷Li aus dem Primärkühlkreis eines Kernkraftwerks. Das Kühlwasser wird dem Primärkühlkreis entnommen und über den Kühlwasservorlauf 1 der Elektrodialyseanlage zugeführt. Das an ⁷Li bzw. LiOH abgereicherte Kühlwasser wird über den Kühlwasserrücklauf 2 wieder in den Primärkühlkreis zurückgespeist. Das Kernstück der Anlage ist ein Elektrodialysemodul 3 mit einer großen Anzahl von Zellen, die eine insgesamt große Membranoberfläche bilden. Das zu behandelnde Kühlwasser wird über den Diluateinlauf 10 dem Elektrodialysemodul 3 zugeführt. Der Diluateinlauf 10 wird entweder unmittelbar von dem Kühlwasservorlauf 1 gespeist, oder das Kühlwasser wird erst über einen Zulauf 8 einem Diluatvorlagebehälter 4 und von dort dem Elektrodialysemodul 3 über den Diluateinlauf 10 zugeführt.

Das Elektrodialysemodul ist prinzipiell wie folgt aufgebaut. Ein Modul wird aus einer alternierenden Folge von Anionenaustauschermembranen, Abstandhaltern, Kationenaustauschermembranen und den beiden außeren Flächenelektroden zusammengesetzt. Die Abstandhalter bestehen aus Polypropylen, haben eine Dicke von ca. 1 mm und sorgen damit für einen definierten Abstand zwischen den Membranen und bilden Strömungskanäle entlang der Membranen für den Diluat- und den Konzentratkreislauf. Typischerweise werden ca. 50 Membranpaare benutzt, die effektive Fläche einer Membran beträgt 16 cm x 60 cm. Die den beiden Elektroden unmittelbar benachbarten Kammern sind durch Kationenaustauschermembranen vom übrigen Membranstapel getrennt und werden von einem separaten Elektrolytkreislauf, der Flüssigkeit aus dem Konzentratkreislauf enthält, durchströmt (Elektrodenspülung). Durch die Art der Abstandhalter zwischen den Elektroden und der jeweils ersten Kationenaustauschermembran wird gewährleistet, daß es zu keiner Vermischung von Elektrodenspülkreislauf, Konzentratkreislauf und Diluatkreislauf kommt. Die Flächen der Elektroden betragen ca. 12 cm x 20 cm, sie bestehen aus Titan, ihre Oberfläche ist mit Edelmetalloxiden (Pt, Ir) dotiert.

Der gesamte Stapel wird zwischen zwei Rahmen durch Zugstangen zusammengepreßt. Durchführungen an beiden Rahmen erlauben die elektrische Kontaktierung der Elektroden sowie den Anschluß der verschiedenen Kreislaufleitungen.

In dem Diluatauslauf 16 des Elektrodialysemoduls 3 ist die ⁷Li-Konzentration reduziert. Der Diluatauslauf 16 kann entweder direkt in den Kühlwasserrücklauf 2 münden oder, wie im dargestellten Beispielsfall, vorzugsweise in einem Produktvorlagebehälter 6 zwischengespeichert werden.

Der Konzentrateinlauf 11 des Elektrodialysemoduls 3 wird von einem Konzentratvorlagebehälter 5 gespeist, in den aus dem Elektrodialysemodul 3 am Konzentratauslauf 17 austretendes Konzentrat zurückgeführt wird. Das Konzentrat kann alternativ oder parallel auch mittels des Konzentratabzugs 9 von dem Konzentratauslauf 17 oder aus dem Konzentratvorlagebehälter 5 abgezogen werden. Die Elektrodenspülung 7 erfolgt ebenfalls mittels des Konzentrats aus dem Konzentratvorlagebehälter 5, in den die Elektrodenspüllösung zurückgeführt wird. Der Konzentratvorlagebehälter 5 kann zum Anfahren der Anlage über den Deionatzulauf 26 gefüllt werden. Beim Lithiumentzug kann das Deionat dabei zur Erhöhung der Leitfähigkeit mit Lithiumhydroxid versetzt sein.

Im Konzentratauslauf 17 ist die ⁷Li-Konzentration gegenüber dem Konzentrateinlauf 11 erhöht. Das auf diese Weise gewonnene Konzentrat bzw. das in dem Konzentratvorlagebehälter 5 angesammelte Konzentrat kann in der vorliegenden Form zwischengespeichert und bei Bedarf in den Primärkühlkreis zurückgeführt werden. Im Fall von Lastfolgebetrieb kann in dem Elektrodialysemodul 3 oder dem Konzentratvorlagebehälter 5 zwischengespeichertes ⁷Li durch einfaches Umkehren der Polung an den Elektroden dem Primärkühlkreis zugesetzt werden. Alternativ kann das Konzentrat auch mit weiteren Verfahren, beispielsweise mit allen gängigen Eindampfungs- und Trocknungsverfahren weiter an ⁷Li oder LiOH angereichert werden.

Um die Membranen des Elektrodialysemoduls 3 vor dem Zusetzen durch etwa vorhandene kolloidale Verunreinigung oder andere gelöste Stoffe zu schützen, ist es vorteilhaft, die an dem Elektrodialysemodul anliegende Elektrodialysespannung von Zeit zu Zeit umzupolen, wobei auch der Durchfluß von Diluat und Konzentrat in dem Elektrodialysemodul 3 gewechselt wird. Durch regelmäßiges Umpolen der angelegten Dialysespannung bei gleichzeitigem Umschalten der Transportrichtung der durchströmenden Medien kann einem Zusetzen der Membranen entgegengewirkt werden, ohne daß bereits entzogenes Lithium verlorengeht. Teilchen und Stoffe, die sich eventuell auf den Membranen abgesetzt haben, lösen sich ab und werden mit dem Strom abtransportiert.

Das elektrische Umpolen der Elektrodialysespannung erfolgt mittels einer elektronischen Schaltung. Die begleitende Umschaltung der Durchflußrichtung erfolgt mittels in Fig. 1 nicht dargestellter Steuerventile. In einer ersten Polung ist der Diluateinlauf 10 mit einem ersten Einlaß 12, der Diluatauslauf 16 mit einem ersten Auslaß 14, der Konzentrateinlauf 11 mit einem zweiten Einlaß 13 und der Konzentratauslauf 17 mit einem zweiten Auslaß 15 des Elektrodialysemoduls 3 verbunden. Bei umgekehrter Polung wird mittels des skizzierten Leitungsnetzes und der nicht dargestellten Steuerventile der Diluateinlauf 10 mit dem zweiten Einlaß 13, der Diluatauslauf 16 mit dem zweiten Auslaß 15, der Konzentrateinlauf 11 mit dem ersten Einlaß 12 und der Konzentratauslauf 17 mit dem ersten Auslaß 14 des Elektrodialysemoduls 3 verbunden.

Da die erfindungsgemäße Vorrichtung zum überwiegenden Teil in einem Bereich mit einem geringen Druckniveau arbeitet, können die Leitungen zwischen dem Primärkühlkreis und dem Elektrodialysemodul 3 und/oder die Leitungen in der Anlage selbst nicht nur aus Stahl, sondern vorteilhafterweise überwiegend aus Kunststoff bestehen und damit kostengünstiger als Metallrohre sein. Kunststoffrohre sind zudem resistent gegen die verwendeten Chemikalien und haben im Hinblick auf die bei der Elektrodialyse eingesetzten elektrischen Spannungen Sicherheitsvorteile, da es nicht zu Spannungsverschleppungen kommen kann.

Die in Fig. 1 dargestellte Anlage kann in verschiedener Weise betrieben werden.

Eine erste, vorteilhafte Variante kann darin bestehen, daß die Anlage im Chargenbetrieb arbeitet. Dabei wird eine Charge Kühlwasser dem Primärkühlkreis entnommen und dem Diluatvorlagebehälter 4 zugeführt. Aus dem Diluatvorlagebehälter 4 wird das Kühlwasser im Kreislauf über das Elektrodialysemodul 3 in den Diluatvorlagebehälter 4 zurückzirkuliert, bis eine gewünschte Abreicherung an ⁷Li erfolgt ist. Danach wird diese Charge über den Vorlageabzug 23 oder den Kühlwasserrücklauf 2 in den Primärkühlkreis zurückgespeist. Vorteilhafterweise wird zwischen aufeinanderfolgenden Chargen eine Umpolung des Elektrodialysemoduls 3 vorgenommen. Diese Betriebsweise ist geeignet, um einzelne Chargen zu behandeln und die Anlage in den zwischenliegenden Zeiträumen entweder stillzusetzen oder Chargen, gegebenenfalls anderer Zusammensetzung oder mit der Zielrichtung, andere Substanzen abzutrennen, zu betreiben. Ein Vorteil des Chargenbetriebs besteht darin, daß die Elektrodialyseeinheit selbst nicht mit dem Druck des Primärkühlwasserkreislaufs beaufschlagt wird, was unter Sicherheitsaspekten wünschenswert sein kann.

Eine zweite Variante kann darin bestehen, daß die Anlage im kontinuierlichen Betrieb arbeitet. Dabei wird kontinuierlich dem Primärkühlkreis entnommenes Kühlwasser unmittelbar, d.h. nicht über den Diluatvorlagebehälter 4, dem Diluateinlauf 10 des Elektrodialysemoduls 3 zugeführt und das aus dem Elektrodialysemodul 3 austretende Diluat in den Primärkühlkreis, gegebenenfalls über den Produktvorlagebehälter 6, zurückgespeist. Diese Verfahrensweise ist für hohe Durchsätze geeignet, insbesondere wenn die Abtrennungsleistung des Elektrodialysemoduls hoch ist.

Eine dritte vorteilhafte Variante kann darin bestehen, daß die Anlage im semikontinuierlichen Betrieb arbeitet. Dabei wird kontinuierlich dem Primärkühlkreis entnommenes Kühlwasser dem Diluatvorlagebehälter 4 zugeführt und dem Diluatvorlagebehälter 4 entnommenes Kühlwasser durch das Elektrodialysemodul 3 geleitet und anschließend in dem Primärkühlkreis zurückgespeist. Dabei wird ein Teilstrom des aus dem Elektrodialysemodul 3 austretenden Diluats im Kreislauf in den Diluatvorlagebehälter 4 zurückzirkuliert. Im semikontinuierlichen Betrieb kann eine Teilabtrennung von Lithium im optimalen Konzentrationsbereich stattfinden. Das Volumen im Diluatvorlagebehälter 4 wird durch den kontinuierlichen Zulauf an Rohlösung aus dem Primärkühlkreis annähernd konstant gehalten. Diese Betriebsweise ist von Vorteil, um die gesamte Anlage auch in solchen Fällen, in denen nur eine geringe Abtrennung von ⁷Li erwünscht ist, mit hohen Volumenströmen und somit bei einem günstigen Arbeitspunkt zu betreiben.

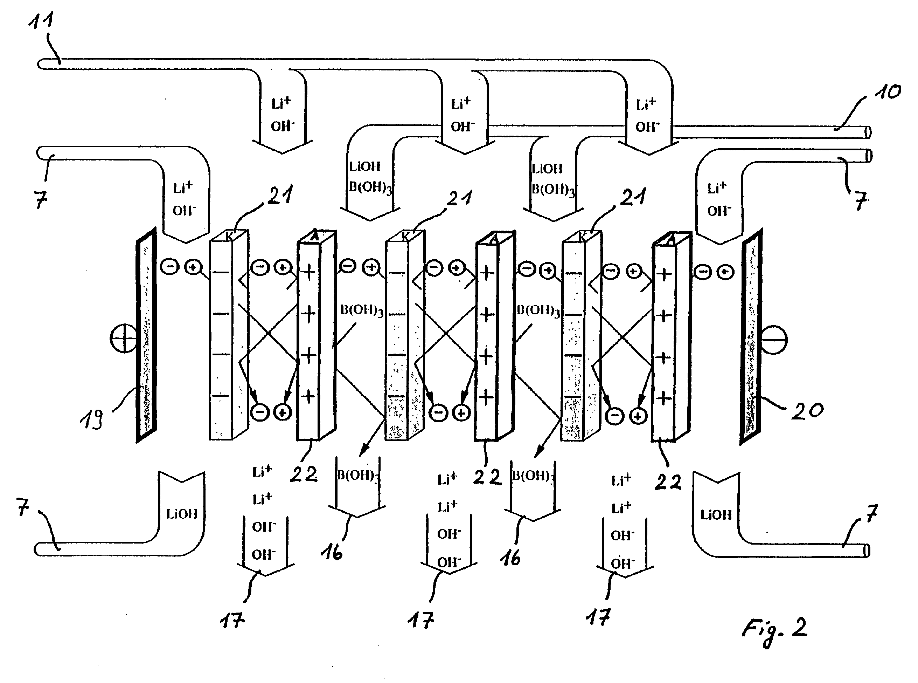

In Fig. 2 ist die prinzipielle Funktionsweise eines Elektrodialysemoduls 3 in der Bauart einer Mehrfachzelle dargestellt. Zwischen der Anode 19 und der Kathode 20 liegt eine Spannung an, die ein elektrisches Feld mit der Stärke von 10 V/cm erzeugt, wobei ein Strom von ca. 2 bis 3 mA/cm² fließt. Zwischen den Elektroden befinden sich in alternierender Anordnung kationenselektive 21 und anionenselektive 22 Membranen. Das mit Lithiumhydroxid und Borsäure versehene Kühlwasser wird über den Diluateinlauf 10 zugeführt. Gleichzeitig wird, an benachbarter Stelle zwischen den Zellen, über den Konzentrateinlauf 11 Lithiumhydroxid-Konzentratlösung zugeführt. Beim Durchlauf durch das Elektrodialysemodul 3 reichert sich das Diluat an Lithium ab, so daß der Diluatauslauf 16 eine geringere Lithiumkonzentration aufweist als der Diluateinlauf 10. Umgekehrt wird das Konzentrat mit Lithium angereichert, so daß die Konzentration im Konzentratauslauf 17 höher als im Konzentrateinlauf 11 ist. Die Elektrodenzellen werden mittels der Elektrodenspülung 7 separat von diesem Vorgang gespült.

Es ist ersichtlich, daß mittels der in dieser Figur dargestellten Elektrodialyse sowie der anderen in dieser Anmeldung beschriebenen Abwandlungen nicht nur ⁷Li abgetrennt werden kann, sondern daß damit auch bei entsprechender Fahrweise und dem Einsatz geeigneter Membranen Borsäure bzw. ¹⁰Bor aus dem Primärkühlkreis rückgewonnen werden kann. Ferner kann mit diesem Verfahren auch Borsäure aus Leckagewasser rückgewonnen werden oder Borsäure aus flüssigen radioaktiven Abfällen zur Reduzierung der Abfallmenge abgetrennt werden. Auch das Abtrennen von Radionukliden und chemischen Verunreinigungen aus dem Primärkühlkreis, dem Kondensat, dem Speisewasser oder dem Zwischenkühlwasserkreis eines Kernkraftwerks, das nach dem Stand der Technik mit Ionenaustauschern durchgeführt wird, kann mittels der Elektrodialyse erfolgen.

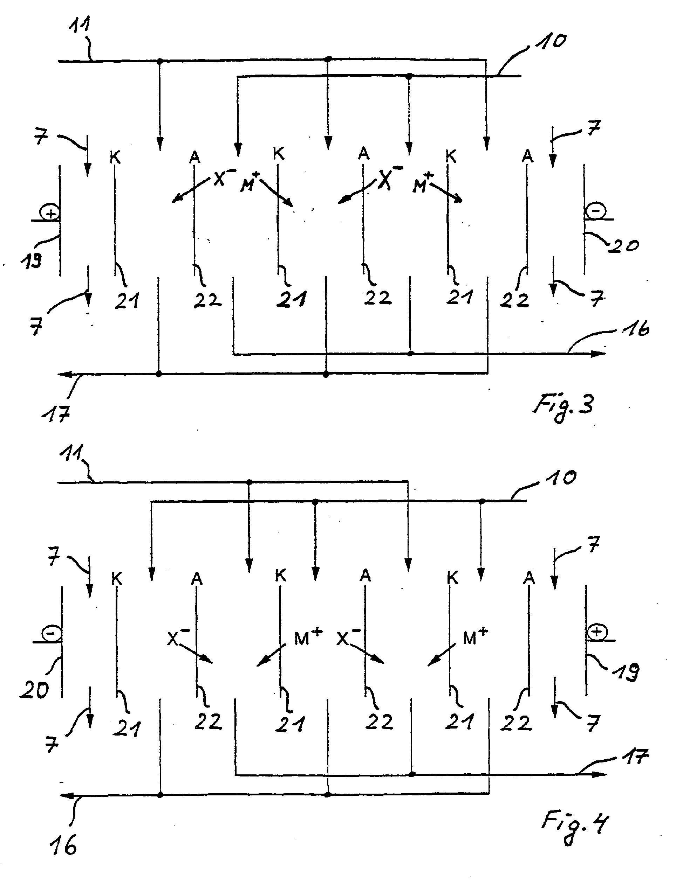

Die Fig. 3 zeigt ein schematisches Bild zu Fig. 2. In der Fig. 4 ist gegenüber der Fig. 3 die elektrische Spannung des Elektrodialysemoduls 3 umgepolt und der Durchfluß der Flüssigkeiten (ausgenommen die Elektrodenspülung 7) invertiert.

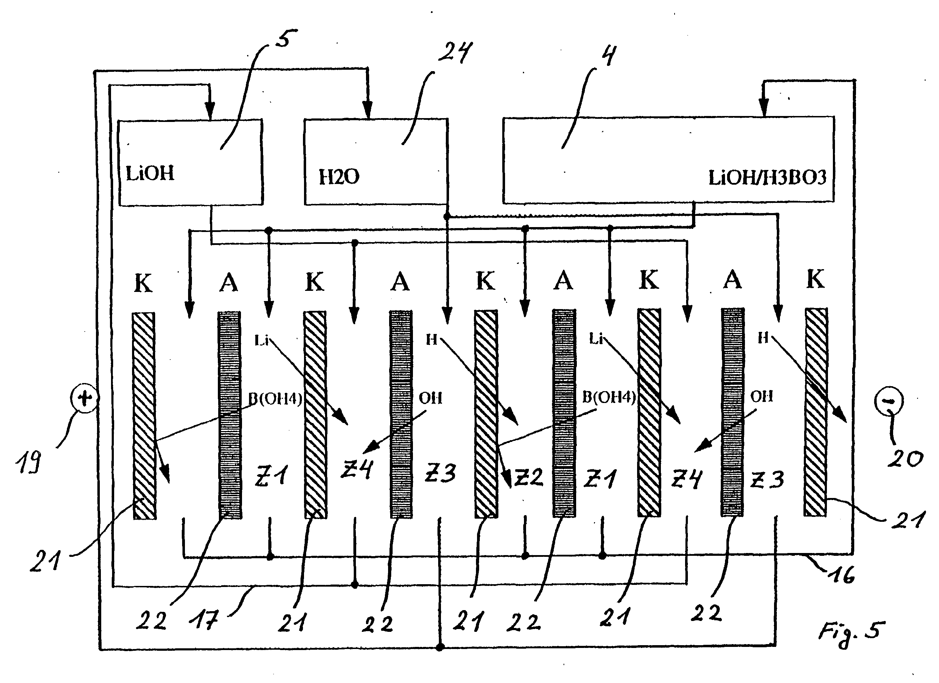

Die Fig. 5 zeigt eine erfindungsgemäße Elektrodialyse in einer Konfiguration mit vier Kammern bzw. Zellen, Z1, Z2, Z3, Z4 im Satzbetrieb. Diese Anordnung kann eingesetzt werden, wenn die Anionenaustauschermembranen 22 aufgrund ihrer Beschaffenheit nicht nur Hydroxidionen, sondern auch Borationen passieren lassen. Mit der in Fig. 2 beschriebenen Anordnung käme es dann zu einer unerwünschten Entborierung des Primärkühlmittels. In Fig. 5 läuft das Diluat aus dem Diluatvorlagebehälter 4 den Kammern Z1 und Z2 zu. Konzentratlösung läuft aus dem Konzentratvorlagebehälter 5 in die Kammer Z4, und reines Wasser wird aus einem Deionatvorlagebehälter 24 durch die Kammer Z3 geleitet. Unter dem Einfluß des elektrischen Felds wandern die Lithiumionen aus der Kammer Z1 durch die Kationenaustauschermembran 21 auf der rechten Seite dieser Kammer in die Kammer Z4. Gleichzeitig wandert ein Teil der Borationen durch die Anionenaustauschermembran auf der linken Seite der Kammer Z1 in die Kammer Z2, deren Inhalt die ursprüngliche Zusammensetzung der Diluatvorlagelösung hatte. Diese Borationen können nun aber nicht weiter in Richtung Anode 19 wandern, da die linke Begrenzung der Kammer Z2 aus einer Kationenaustauschermembran besteht. Diese Kammer Z2 wird sich also an Borationen anreichern.

Unter dem Einfluß des elektrischen Felds werden aus der Kammer Z3 die Autoprotolyseprodukte von Wasser, nämlich Hydroxidionen und Hydroniumionen, in die benachbarten Zellen wandern, und zwar das Hydroxidion in Kammer Z4, um dort mit dem Lithiumion formal elektrisch neutrales LiOH zu bilden, und das Hydroniumion wandert in Kammer Z2 und bildet dort mit dem Boration formal elektrisch neutrale Borsäure. Da die Auslaufkanäle der Kammern Z1 und Z2 verbunden sind, kommt es insgesamt nicht zu einer Entborierung der Diluatvorlage, wohingegen sich LiOH im Konzentratauslauf 17 anreichert.

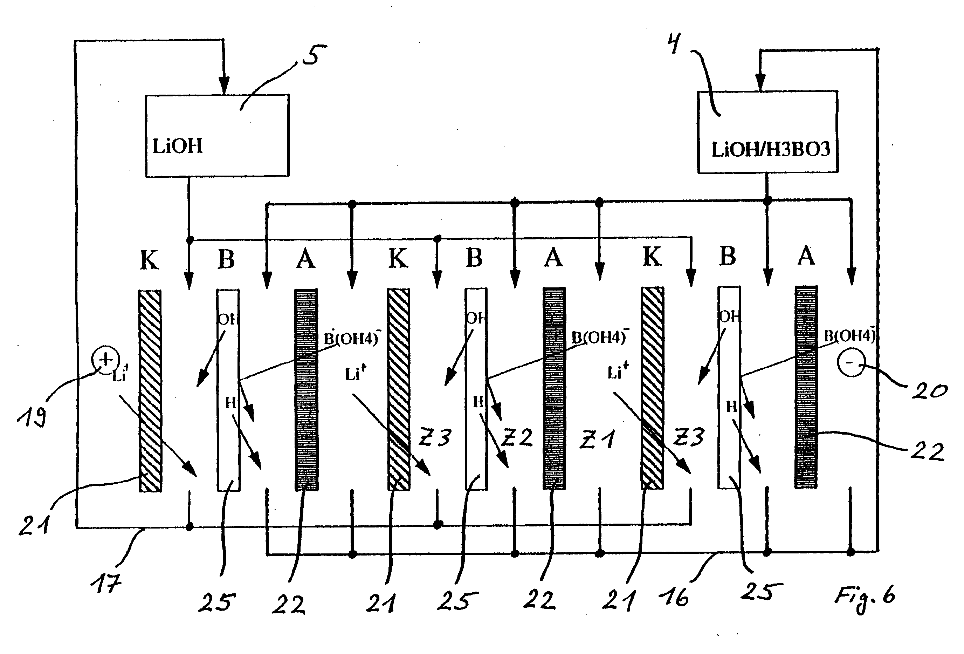

Fig. 6 zeigt eine erfindungsgemäße Elektrodialyse unter Einsatz bipolarer Membranen 25 in Dreikammer-Konfiguration Z1, Z2, Z3, wenn die Anionenaustauschermembranen 22 wiederum einen Teil der Borationen passieren lassen. Diluatlösung fließt aus dem Diluatvorlagebehälter 4 den Kammern Z1 und Z2 zu. Lithiumionen wandern unter dem Einfluß des elektrischen Felds durch die Kationenaustauschermembran 21 in die Kammer Z3, die Teil des Konzentratkreislaufs ist. Gleichzeitig wandert ein Teil der Borationen durch die auf der linken Seite der Kammer Z1 angeordnete Anionenaustauschermembran 22 in die Kammer Z2, deren Inhalt sich zunächst an Borationen anreichert, wohingegen die Kammer Z1 an Borationen verarmt. Da aber die Auslaufströme der Kammern Z1 und Z2 wieder vereinigt werden, bleibt die Gesamtkonzentration an Bor im Diluatkreislauf konstant. Die Autoprotolyseprodukte von Wasser, welches in die bipolare Membran 25 diffundiert, wandern in die benachbarten Kammern Z3 und Z2. In der Kammer Z3 vereinigt sich das Hydroxidion mit dem Litiumion und bildet dort formal elektrisch neutrales LiOH, das sich im Konzentratkreislauf anreichert. Das Hydroniumion wandert aus der bipolaren Membran 25 in die Kammer Z2 und überführt das Boration in elektrisch neutrale Borsäure. Diese Anordnung hat gegenüber der Anordnung von Fig. 5 den Vorteil, daß der elektrische Widerstand in der Deionatphase der bipolaren Membran 25 kleiner ist als in der Kammer Z3 von Fig. 5.

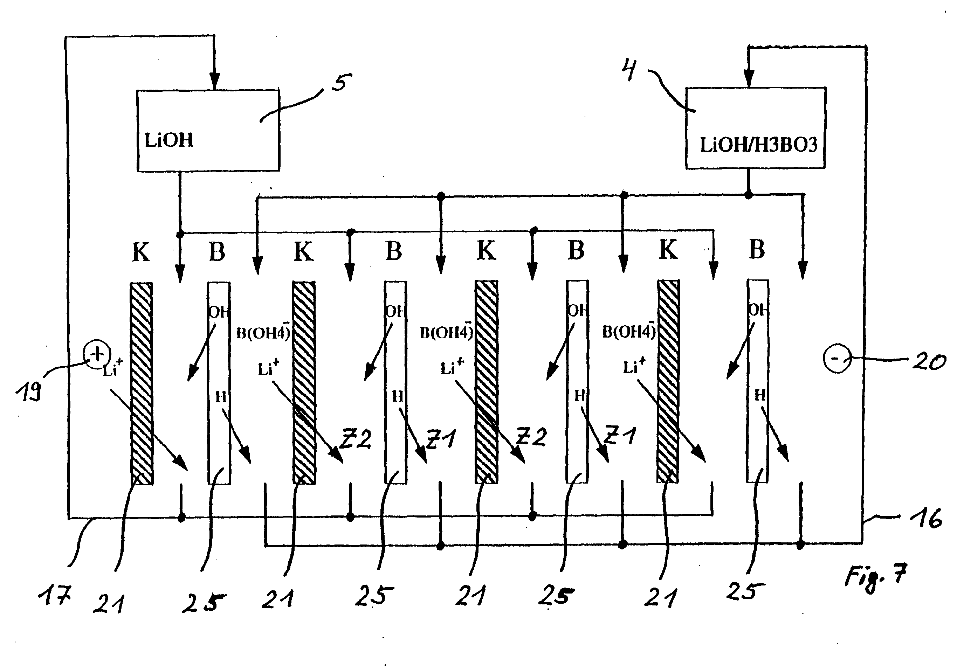

Fig. 7 zeigt eine erfindungsgemäße Elektrodialyse mit bipolaren Membranen in Zweikammer-Konfiguration Z1 und Z2. Die Diluatlösung strömt aus dem Diluatvorlagebehälter 4 der Kammer Z1 zu, während die Konzentratlösung aus dem Konzentratvorlagebehälter 5 in die Kammer Z2 geleitet wird. Unter dem Einfluß des elektrischen Felds wandern die Lithiumionen durch die kationenselektive Membran 21 in die Kammer Z2, während die Borationen die Kammer Z1 nicht verlassen können. Aus der bipolaren Membran 25 wandern die Autoprotolyseprodukte des Wassers, Hydroxidionen und Hydroniumionen, in die benachbarten Kammern Z1 und Z2. In der Kammer Z2 verbinden sich die Hydroxidionen mit den Lithiumionen formal zu elektrisch neutralem LiOH, dessen Konzentration auf der Konzentratseite steigt. Umgekehrt vereinigen sich die Hydroniumionen mit den Borationen in Kammer Z1 zu elektrisch neutraler Borsäure, deren Konzentration in diesem Kreislauf konstant bleibt.

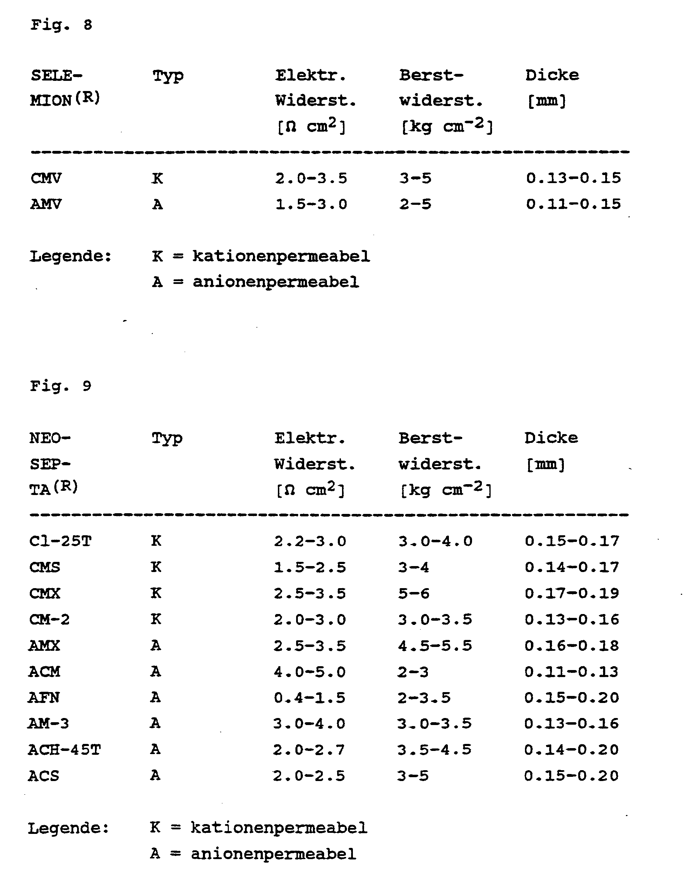

Die Figuren 8 und 9 zeigen in einer Tabelle die technischen Daten der obengenannten Austauschermembranen. Die Kationenaustauschermembranen sind stark sauer (-SO₃H) und liegen in der H-Form vor, die Anionenaustauschermembranen sind stark basisch (-NR₃⁺) und liegen in der OH⁻-Form vor. Der elektrische Widerstand wurde mit 0.5 n NaCl-Lösung bei 25 °C bestimmt. CMX und AMX sind mechanisch verstärkt, AFN ist Fouling resistent und ACH-45T ist bei hohen pH-Werten einsetzbar. Bei der SELEMION^{(R)} AMP handelt es sich um eine besonders alkalistabile Membran und bei der SELEMION^{(R)} AMF um eine Fouling resistente.

### Bezugszeichenliste

- 1: Kühlwasservorlauf
- 2: Kühlwasserrücklauf
- 3: Elektrodialysemodul
- 4: Diluatvorlagebehälter
- 5: Konzentratvorlagebehälter
- 6: Produktvorlagebehälter
- 7: Elektrodenspülung
- 8: Zulauf zu 4
- 9: Konzentratabzug
- 10: Diluateinlauf
- 11: Konzentrateinlauf
- 12: erster Einlaß
- 13: zweiter Einlaß
- 14: erster Auslaß
- 15: zweiter Auslaß
- 16: Diluatauslauf
- 17: Konzentratauslauf
- 18: Diluatrückführung
- 19: Anode
- 20: Kathode
- 21: kationselektive Membran
- 22: anionselektive Membran
- 23: Vorlageabzug
- 24: Deionatvorlagebehälter
- 25: bipolare Membran
- 26: Deionatzulauf
- A: anionenselektive Membran
- B: bipolare Membran
- K: kationenselektive Membran
- Z: Kammer, Zelle

## Patentansprüche

1. Verfahren zum Abtrennen von ⁷Li aus dem Primärkühlkreis eines Kernkraftwerks, insbesondere eines Druckwasserreaktors,
wobei das mit ⁷Li und Borsäure versehene Kühlwasser aus dem Primärkühlkreis entnommen und durch ein Elektrodialysemodul (3) geleitet wird, in dem ⁷Li mittels Elektrodialyse aus Kühlwasser abgetrennt wird und als Konzentrat aus dem Elektrodialysemodul (3) austritt, und aus dem Elektrodialysemodul (3) austretendes Diluat in den Primärkühlkreis zurückgespeist wird,
**dadurch gekennzeichnet, daß**
in dem Elektrodialysemodul (3) Membranen gemäß einem der folgenden Fälle a) bis d) verwendet werden:
- in einem ersten Fall a) Anionenaustauschermembranen (22), die derart beschaffen sind, daß sie zwar Hydroxidionen, nicht aber Borationen passieren lassen,
- in einem zweiten Fall b) Anionenaustauschermembranen (22), die derart beschaffen sind, daß sie nicht nur Hydroxidionen, sondern auch Borationen passieren lassen, wobei Auslaufströme von Kammern (Z1, Z2) des Elektrodialysemoduls (3) wieder derart vereinigt werden, daß die Gesamtkonzentration an Bor im Diluatkreislauf des Elektrodialysemoduls (3) konstant bleibt und es nicht zu einer Entborierung der Diluatvorlage kommt,
- in einem dritten Fall c) Anionenaustauschermembranen (22), die derart beschaffen sind, daß sie nicht nur Hydroxidionen, sondern auch Borationen passieren lassen, wobei Auslaufströme von Kammern (Z1, Z2) des Elektrodialysemoduls (3) wieder derart vereinigt werden, daß die Gesamtkonzentration an Bor im Diluatkreislauf des Elektrodialysemoduls (3) konstant bleibt und es nicht zu einer Entborierung der Diluatvorlage kommt, und bipolare Membranen (25), die derart beschaffen sind, daß sie weder Hydroxidionen noch Borationen passieren lassen,
- in einem vierten Fall d) bipolare Membranen (25), die derart beschaffen sind, daß sie weder Hydroxidionen noch Borationen passieren lassen,
so daß
das ⁷Li mittels des Elektrodialysemoduls (3) nach Wahl aus dem mit ⁷Li und Borsäure versehenen Kühlwasser abgetrennt wird,
das Bor, das in dem Kühlwasser enthalten ist, das dem Elektrodialysemoduls (3) zugeleitet wird, zusammen mit dem an ⁷Li abgereicherten Kühlwasser von dem Elektrodialysemodul (3) in den Reaktor zurückgeführt wird,
und es beim Leiten des mit ⁷Li und Borsäure versehenen Kühlwassers durch das Elektrodialysemodul (3) nicht zu einer durch das Elektrodialysemodul (3) verursachten Entborierung des Primärkühlkreises kommt,
und daß
die an dem Elektrodialysemodul (3) anliegende Elektrodialysespannung von Zeit zu Zeit umgepolt wird, wobei auch der Durchfluß von Diluat und Konzentrat in dem Elektrodialysemodul (3) gewechselt wird, aus dem Elektrodialysemodul (3) austretendes Konzentrat einem Konzentratvorlagebehälter (5) zugeführt wird,
Diluat vor der Zurückspeisung in den Primärkühlkreis in einem Produktvorlagebehälter (6) zwischengespeichert wird,
die Elektrodenzellen des Elektrodialysemoduls (3) getrennt von dessen anderen Zellen gespült werden und ⁷Li oder ⁷LiOH zwischengespeichert und bei Bedarf, insbesondere im Lastfolgebetrieb mittels Umpolen des Elektrodialysemoduls (3), in den Primärkühlkreis zurückgespeist wird.

2. Verfahren nach Anspruch 1, **dadurch gekennzeichnet, daß** es im Chargenbetrieb durchgeführt wird, wobei eine Charge Kühlwasser des Primärkühlkreises einem Diluatvorlagebehälter (4) zugeführt, Kühlwasser aus dem Diluatvorlagebehälter (4) im Kreislauf über das Elektrodialysemodul (3) in den Diluatvorlagebehälter (4) zurück zirkuliert wird und nach Erreichen einer vorbestimmten ⁷Li-Grenzkonzentration der Charge diese in den Primärkühlkreis zurückgespeist wird.

3. Verfahren nach Anspruch 2, **dadurch gekennzeichnet, daß** das Elektrodialysemodul (3) zwischen aufeinanderfolgenden Chargen umgepolt wird.

4. Verfahren nach Anspruch 1, **dadurch gekennzeichnet, daß** es im kontinuierlichen Betrieb durchgeführt wird, wobei kontinuierlich dem Primärkühlkreis entnommenes Kühlwasser unmittelbar dem Elektrodialysemodul (3) zugeführt und aus dem Elektrodialysemodul (3) austretendes Diluat in den Primärkühlkreis zurückgespeist wird.

5. Verfahren nach Anspruch 1, **dadurch gekennzeichnet, daß** es im semikontinuierlichen Betrieb durchgeführt wird, wobei kontinuierlich dem Primärkühlkreis entnommenes Kühlwasser einem Diluatvorlagebehälter (4) zugeführt, dem Diluatvorlagebehälter (4) entnommenes Kühlwasser durch das Elektrodialysemodul (3) geleitet und anschließend in den Primärkühlkreis zurückgespeist wird, wobei ein Teilstrom des aus dem Elektrodialysemodul (3) austretenden Diluats im Kreislauf in den Diluatvorlagebehälter (4) zurück zirkuliert wird.

6. Verfahren nach einem der vorhergehenden Ansprüche, **dadurch gekennzeichnet, daß** aus dem Elektrodialysemodul (3) austretendes Konzentrat weiter aufkonzentriert wird.

7. Primärkühlkreis eines Kernkraftwerks, insbesondere eines Druckwasserreaktors, umfassend eine Abtrennvorrichtung zur Durchführung eines Verfahrens nach einem der Ansprüche 1 bis 6 zum Abtrennen von ⁷Li aus dem mit ⁷Li und Borsäure versehenen Kühlwasser des Primärkühlkreises, wobei die Abtrennvorrichtung ein Elektrodialysemodul (3) aufweist, durch das aus dem Primärkühlkreis entnommenes, mit ⁷Li und Borsäure versehenes Kühlwasser leitbar ist, und aus dem Elektrodialysemodul (3) austretendes Diluat in den Primärkühlkreis zurückspeisbar ist wird,
**dadurch gekennzeichnet, daß**
das Elektrodialysemodul (3) Membranen gemäß einem der folgenden Fälle a) bis d) aufweist:
- in einem ersten Fall a) Anionenaustauschermembranen (22), die derart beschaffen sind, daß sie zwar Hydroxidionen, nicht aber Borationen passieren lassen,
- in einem zweiten Fall b) Anionenaustauschermembranen (22), die derart beschaffen sind, daß sie nicht nur Hydroxidionen, sondern auch Borationen passieren lassen, wobei Auslaufströme von Kammern (Z1, Z2) des Elektrodialysemoduls (3) wieder derart vereinigt werden, daß die Gesamtkonzentration an Bor im Diluatkreislauf des Elektrodialysemoduls (3) konstant bleibt und es nicht zu einer Entborierung der Diluatvorlage kommt,
- in einem dritten Fall c) Anionenaustauschermembranen (22), die derart beschaffen sind, daß sie nicht nur Hydroxidionen, sondern auch Borationen passieren lassen, wobei Auslaufströme von Kammern (Z1, Z2) des Elektrodialysemoduls (3) wieder derart vereinigt werden, daß die Gesamtkonzentration an Bor im Diluatkreislauf des Elektrodialysemoduls (3) konstant bleibt und es nicht zu einer Entborierung der Diluatvorlage kommt, und bipolare Membranen (25), die derart beschaffen sind, daß sie weder Hydroxidionen noch Borationen passieren lassen,
- in einem vierten Fall d) bipolare Membranen (25), die derart beschaffen sind, daß sie weder Hydroxidionen noch Borationen passieren lassen,
so daß
das ⁷Li mittels des Elektrodialysemoduls (3) nach Wahl aus dem mit ⁷Li und Borsäure versehenen Kühlwasser abtrennbar ist,
das Bor, das in dem Kühlwasser enthalten ist, das dem Elektrodialysemoduls (3) zugeleitet wird, zusammen mit dem an ⁷Li abgereicherten Kühlwasser von dem Elektrodialysemodul (3) in den Reaktor zurückführbar ist,
und es beim Leiten des mit ⁷Li und Borsäure versehenen Kühlwassers durch das Elektrodialysemodul (3) nicht zu einer durch das Elektrodialysemodul (3) verursachten Entborierung des Primärkühlkreises kommt,
und daß
die an dem Elektrodialysemodul (3) anliegende Elektrodialysespannung von Zeit zu Zeit umpolbar ist, wobei auch der Durchfluß von Diluat und Konzentrat in dem Elektrodialysemodul (3) gewechselt wird,
die Abtrennvorrichtung einen Konzentratvorlagebehälter (5) aufweist, dem aus dem Elektrodialysemodul (3) austretendes Konzentrat zuführbar ist,
die Abtrennvorrichtung einen Produktvorlagebehälter (6) aufweist, in dem Diluat vor der Zurückspeisung in den Primärkühlkreis zwischenspeicherbar ist,
die Elektrodenzellen des Elektrodialysemoduls (3) getrennt von dessen anderen Zellen spülbar sind und
die Abtrennvorrichtung einen Speicher zum Zwischenspeichern von ⁷Li oder ⁷LiOH aufweist, aus dem bei Bedarf, insbesondere im Lastfolgebetrieb mittels Umpolen des Elektrodialysemoduls (3), ⁷Li oder ⁷LiOH in den Primärkühlkreis zurückspeisbar ist.

8. Primärkühlkreis nach Anspruch 7, **dadurch gekennzeichnet, daß** die Abtrennvorrichtung einen Diluatvorlagebehälter (4) aufweist, aus welchem dem Primärkühlkreis entnommenes Kühlwasser dem Elektrodialysemodul (3) zuführbar ist.

9. Primärkühlkreis nach einem der Ansprüche 7 bis 8, **dadurch gekennzeichnet, daß** die Membranen des Elektrodialysemoduls (3) aus Kunststoffilmen mit eingebetteten ionischen Gruppen bestehen.

10. Primärkühlkreis nach einem der Ansprüche 7 bis 9, **dadurch gekennzeichnet, daß** das Elektrodialysemodul (3) eine Mehrfachzelle mit alternierend geschalteten anionen- und kationenselektiven Membranen umfaßt.

11. Primärkühlkreis nach einem der Ansprüche 7 bis 10, **dadurch gekennzeichnet, daß** die Kühlwasserleitungen zwischen dem Primärkühlkreis und dem Elektrodialysemodul (3) und/oder die Leitungen in der Abtrennvorrichtung überwiegend aus Kunststoff bestehen.

12. Primärkühlkreis nach einem der Ansprüche 7 bis 11, **dadurch gekennzeichnet, daß** die Abtrennvorrichtung eine Stufe zum Konzentrieren des Konzentrats aufweist.

## Claims

1. A method for separating ⁷Li from the primary cooling circuit of a nuclear power station, in particular a pressurised water reactor,
wherein the cooling water provided with ⁷Li and boric acid is removed from the primary cooling circuit and conveyed through an electrodialysis module (3), in which ⁷Li is separated from the cooling water by means of electrodialysis and emerges as a concentrate from the electrodialysis module (3), and diluate emerging from the electrodialysis module (3) is fed back into the primary cooling circuit,
**characterised in that**
membranes according to one of the following cases a) to d) are used in the electrodialysis module (3):
- in a first case a), anion exchange membranes (22) which are made in such a way that they allow hydroxide ions to pass, but not borate ions,
- in a second case b), anion exchange membranes (22) which are made in such a way that they allow not only hydroxide ions to pass, but also borate ions, wherein outflows from chambers (Z1, Z2) of the electrodialysis module (3) are again united in such a way that the total concentration of boron in the diluate circuit of the electrodialysis module (3) remains constant and boron removal from the diluate receiver does not occur.
- in a third case c), anion exchange membranes (22) which are made in such a way that they allow not only hydroxide ions to pass, but also borate ions, wherein outflows from chambers (Z1, Z2) of the electrodialysis module (3) are again united in such a way that the total concentration of boron in the diluate circuit of the electrodialysis module (3) remains constant and boron removal from the diluate receiver does not occur, and bipolar membranes (25) which are made in such a way that they allow neither hydroxide ions nor borate ions to pass,
- in a fourth case d), bipolar membranes (25) which are made in such a way that they allow neither hydroxide ions nor borate irons to pass
so that
the ⁷Li is separated at will from the cooling water provided with ⁷Li and boric acid by means of the electrodialysis module (3),
the boron, which is contained in the cooling water which is fed to the electrodialysis module (3), is fed back together with the cooling water depleted in ⁷Li from the electrodialysis module (3) into the reactor,
and, when the cooling water provided with ⁷Li and boric acid is conveyed through the electrodialysis module (3), removal of boron from the primary cooling circuit caused by the electrodialysis module (3) does not occur,
and that
the polarity of the electrodialysis voltage applied to the electrodialysis module (3) is reversed from time to time, the through-flow of diluate and concentrate in the electrodialysis module (3) also being changed,
concentrate emerging from the electrodialysis module (3) is fed to a concentrate receiver tank (5), diluate is temporarily stored in a product receiver tank (6) before being fed back into the primary cooling circuit,
the electrode cells of the electrodialysis module (3) are rinsed separately from its other cells and ⁷Li or ⁷LiOH is temporarily stored and, when required, is fed back into the primary cooling circuit, especially in the load follow operation by reversing the polarity of the electrodialysis module (3).

2. The method according to claim 1, **characterised in that** it is performed in the charge operation, wherein a charge of cooling water of the primary cooling circuit is fed to a diluate receiver tank (4), cooling water is circulated in a circuit from the diluate receiver tank (4) via the electrodialysis module (3) back into the diluate receiver tank (4) and, after a predetermined ⁷Li threshold concentration of the charge has been reached, the latter is fed back into the primary cooling circuit.

3. The method according to claim 2, **characterised in that** the polarity of the electrodialysis module (3) is reversed between successive charges.

4. The method according to claim 1, **characterised in that** it is performed in the continuous operation, wherein cooling water continuously removed from the primary cooling circuit is fed directly to the electrodialysis module (3) and diluate emerging from the electrodialysis module (3) is fed back into the primary cooling circuit.

5. The method according to claim 1, **characterised in that** it is performed in the semi-continuous operation, wherein cooling water removed continuously from the primary cooling circuit is fed to a diluate receiver tank (4), cooling water removed from the diluate receiver tank (4) is conveyed through the electrodialysis module (3) and then fed back into the primary cooling circuit, wherein a partial flow of the diluate emerging from the electrodialysis module (3) is circulated in a circuit back into the diluate receiver tank (4).

6. The method according to any one of the preceding claims, **characterised in that** concentrate emerging from the electrodialysis module (3) is further concentrated.

7. A primary cooling circuit of a nuclear power station, in particular a pressurised water reactor, comprising a separation device for performing a method according to any one of claims 1 to 6 for the separation of ⁷Li from the cooling water of the primary cooling circuit provided with ⁷Li and boric acid, wherein the separation device comprises an electrodialysis module (3), through which cooling water removed from the primary cooling circuit and provided with ⁷Li and boric acid can be conveyed, and diluate emerging from the electrodialysis module (3) can be fed back into the primary cooling circuit,
**characterised in that**
the electrodialysis module (3) comprises membranes according to one of the following cases a) to d):
- in a first case a), anion exchange membranes (22) which are made in such a way that they allow hydroxide ions to pass, but not borate ions,
- in a second case b), anion exchange membranes (22) which are made in such a way that they allow not only hydroxide ions to pass, but also borate ions, wherein outflows from chambers (Z1 Z2) of the electrodialysis module (3) are again united in such a way that the total concentration of boron in the diluate circuit of the electrodialysis module (3) remains constant and boron removal from the diluate receiver does not occur,
- in a third case c), anion exchange membranes (22) which are made in such a way that they allow not only hydroxide ions to pass, but also borate ions, wherein outflows from chambers (Z1 Z2) of the electrodialysis module (3) are again united in such a way that the total concentration of boron in the diluate circuit of the electrodialysis module (3) remains constant and boron removal from the diluate receiver does not occur, and bipolar membranes (25) which are made in such a way that they allow neither hydroxide ions nor borate ions to pass,
- in a fourth case d), bipolar membranes (25) which are made in such a way that they allow neither hydroxide ions nor borate irons to pass
so that
the ⁷Li can be separated at will from the cooling water provided with ⁷Li and boric acid by means of the electrodialysis module (3),
the boron, which is contained in the cooling water which is fed to the electrodialysis module (3), can be fed back together with the cooling water depleted in ⁷Li from the electrodialysis module (3) into the reactor,
and, when the cooling water provided with ⁷Li and boric acid is conveyed through the electrodialysis module (3), removal of boron from the primary cooling circuit caused by the electrodialysis module (3) does not occur,
and that
the polarity of the electrodialysis voltage applied to the electrodialysis module (3) can be reversed from time to time, the through-flow of diluate and concentrate in the electrodialysis module (3) also being changed,
the separation device comprises a concentrate receiver tank (5), to which concentrate emerging from the electrodialysis module (3) can be fed,
the separation device comprises a product receiver tank (6), in which diluate can be temporarily stored before being fed back into the primary cooling circuit,
the electrode cells of the electrodialysis module (3) can be rinsed separately from its other cells and the separation device comprises a storage unit for the temporary storage of ⁷Li or ⁷LiOH, from which ⁷Li or ⁷LiOH can be fed back into the primary cooling circuit when required, especially in the load follow operation by reversing the polarity of the electrodialysis module (3).

8. The primary cooling circuit according to claim 7, **characterised in that** the separation device comprises a diluate receiver tank (4), from which cooling water removed from the primary cooling circuit can be fed to the electrodialysis module (3).

9. The primary cooling circuit according to any one of claims 7 to 8, **characterised in that** the membranes of the electrodialysis module (3) comprise plastic films with embedded ionic groups.

10. The primary cooling circuit according to any one of claims 7 to 9, **characterised in that** the electrodialysis module (3) comprises a multiple cell with alternatingly connected anion- and cation-selective membranes.

11. The primary cooling circuit according to any one of claims 7 to 10, **characterised in that** the cooling water lines between the primary cooling circuit and the electrodialysis module (3) and/or the lines in the separation device are predominantly made of plastic.

12. The primary cooling circuit according to any one of claims 7 to 11, **characterised in that** the separation device comprises a stage for the concentration of the concentrate.

## Revendications

1. Procédé pour séparer le ⁷Li du circuit de refroidissement primaire d'une centrale nucléaire, en particulier d'un réacteur à eau pressurisée,
selon lequel l'eau de refroidissement chargée en ⁷Li et en acide borique est prélevée du circuit de refroidissement primaire et conduite à travers un module d'électrodialyse (3) dans lequel le ⁷Li est séparé de l'eau de refroidissement par électrodialyse et sort du module d'électrodialyse (3) sous forme de concentrat, et le diluat sortant du module d'électrodialyse (3) est réinjecté dans le circuit de refroidissement primaire,
**caractérisé en ce**
**que** dans le module d'électrodialyse (3) sont utilisées des membranes selon l'un des cas suivants a) à d) :
- dans un premier cas a), des membranes échangeuses d'anions (22) qui sont conçues de manière à laisser passer les ions hydroxyde mais pas les ions borate,
- dans un deuxième cas b) des membranes échangeuses d'anions (22) qui sont conçues de manière à laisser passer non seulement les ions hydroxyde, mais aussi les ions borate, des courants de sortie de chambres (Z1, Z2) du module d'électrodialyse (3) étant de nouveau réunis de manière que la concentration totale en bore dans le circuit de diluat du module d'électrodialyse (3) reste constante et qu'il ne se produise pas une déboration du collecteur de diluat,
- dans un troisième cas c) des membranes échangeuses d'anions (22) qui sont conçues de manière à laisser passer non seulement les ions hydroxyde, mais aussi les ions borate, des courants de sortie de chambres (Z1, Z2) du module d'électrodialyse (3) étant de nouveau réunis de manière que la concentration totale en bore dans le circuit de diluat du module d'électrodialyse (3) reste constante et qu'il ne se produise pas une déboration du récepteur de diluat, et des membranes bipolaires (25) qui sont conçues de manière à ne laisser passer ni les ions hydroxyde ni les ions borate,
- dans un quatrième cas d) des membranes bipolaires (25) qui sont conçues de manière à ne laisser passer ni les ions hydroxyde ni les ions borate,
de sorte
**que** le ⁷Li est séparé au moyen du module d'électrodialyse (3) au choix à partir de l'eau de refroidissement chargée en ⁷Li et en acide borique,
le bore qui est contenu dans l'eau de refroidissement qui est amenée au module d'électrodialyse (3) est ramené avec l'eau de refroidissement enrichie en ⁷Li du module d'électrodialyse (3) dans le réacteur,
et **qu'**il ne se produit pas de déboration du circuit de refroidissement primaire provoquée par le module d'électrodialyse (3) lors du passage de l'eau de refroidissement chargée en ⁷Li et en acide borique à travers le module d'électrodialyse (3),
et **que**
la tension d'électrodialyse appliquée au module d'électrodialyse (3) est inversée de temps en temps, la circulation de diluat et de concentrat dans le module d'électrodialyse (3) s'inversant aussi,
le concentrat sortant du module d'électrodialyse (3) est amené à un réservoir collecteur de concentrat (5),
le diluat est stocké temporairement dans un réservoir collecteur de produit (6) avant d'être réinjecté dans le circuit de refroidissement primaire,
les cellules à électrodes du module d'électrodialyse (3) sont rincées séparément de ses autres cellules et
du ⁷Li ou du ⁷LiOH est stocké temporairement et, en cas de besoin, en particulier en mode suivi de charge, réinjecté dans le circuit de refroidissement primaire par inversion de polarité du module d'électrodialyse (3).

2. Procédé selon la revendication 1, **caractérisé en ce qu'**il est réalisé par lots, un lot d'eau de refroidissement du circuit de refroidissement primaire étant amené à un réservoir collecteur de diluat (4), de l'eau de refroidissement provenant du réservoir collecteur de diluat (4) étant ramenée en circuit fermé dans le réservoir collecteur de diluat (4) via le module d'électrodialyse (3) et, après atteinte d'une concentration limite prédéterminée du lot en ⁷Li ou en bore, celui-ci est réinjecté dans le circuit de refroidissement primaire.

3. Procédé selon la revendication 2, **caractérisé en ce que** la polarité du module d'électrodialyse (3) est inversée entre deux lots successifs.

4. Procédé selon la revendication 1, **caractérisé en ce qu'**il est exécuté en mode continu, de l'eau de refroidissement continuellement prélevée du circuit de refroidissement primaire étant amenée directement au module d'électrodialyse (3) et le diluat sortant du module d'électrodialyse (3) étant réinjecté dans le circuit de refroidissement primaire.

5. Procédé selon la revendication 1, **caractérisé en ce qu'**il est exécuté en mode semi-continu, de l'eau de refroidissement continuellement prélevée du circuit de refroidissement primaire étant amenée à un réservoir collecteur de diluat (4), de l'eau de refroidissement prélevée du réservoir collecteur de diluat (4) étant conduite à travers le module d'électrodialyse (3) et ensuite réinjectée dans le circuit de refroidissement primaire, un courant partiel du diluat sortant du module d'électrodialyse (3) étant ramené en circuit fermé dans le réservoir collecteur de diluat (4).

6. Procédé selon l'une des revendications précédentes, **caractérisé en ce que** le concentrat sortant du module d'électrodialyse (3) est concentré davantage.

7. Circuit de refroidissement primaire d'une centrale nucléaire, en particulier d'un réacteur à eau pressurisée, comprenant un dispositif de séparation permettant de réaliser un procédé selon l'une des revendications 1 à 6 pour séparer le ⁷Li de l'eau de refroidissement chargée en ⁷Li et en acide borique du circuit de refroidissement primaire, le dispositif de séparation présentant un module d'électrodialyse (3) à travers lequel peut être conduite de l'eau de refroidissement prélevée du circuit de refroidissement primaire et chargée en ⁷Li et en acide borique, et le diluat sortant du module d'électrodialyse (3) pouvant être réinjecté dans le circuit de refroidissement primaire,
**caractérisé en ce**
**que** le module d'électrodialyse (3) présente des membranes selon l'un des cas suivants a) à d) :
- dans un premier cas a), des membranes échangeuses d'anions (22) qui sont conçues de manière à laisser passer les ions hydroxyde mais pas les ions borate,
- dans un deuxième cas b) des membranes échangeuses d'anions (22) qui sont conçues de manière à laisser passer non seulement les ions hydroxyde, mais aussi les ions borate, des courants de sortie de chambres (Z1, Z2) du module d'électrodialyse (3) étant de nouveau réunis de manière que la concentration totale en bore dans le circuit de diluat du module d'électrodialyse (3) reste constante et qu'il ne se produise pas une déboration du collecteur de diluat,
- dans un troisième cas c) des membranes échangeuses d'anions (22) qui sont conçues de manière à laisser passer non seulement les ions hydroxyde, mais aussi les ions borate, des courants de sortie de chambres (Z1, Z2) du module d'électrodialyse (3) étant de nouveau réunis de manière que la concentration totale en bore dans le circuit de diluat du module d'électrodialyse (3) reste constante et qu'il ne se produise pas une déboration du récepteur de diluat, et des membranes bipolaires (25) qui sont conçues de manière à ne laisser passer ni les ions hydroxyde ni les ions borate,
- dans un quatrième cas d) des membranes bipolaires (25) qui sont conçues de manière à ne laisser passer ni les ions hydroxyde ni les ions borate,
de sorte
**que** le ⁷Li peut être séparé au moyen du module d'électrodialyse (3) au choix à partir de l'eau de refroidissement chargée en ⁷Li et en acide borique,
le bore qui est contenu dans l'eau de refroidissement qui est amenée au module d'électrodialyse (3) est ramené avec l'eau de refroidissement enrichie en ⁷Li du module d'électrodialyse (3) dans le réacteur,
et **qu'**il ne se produit pas de déboration du circuit de refroidissement primaire provoquée par le module d'électrodialyse (3) lors du passage de l'eau de refroidissement chargée en ⁷Li et en acide borique à travers le module d'électrodialyse (3),
et **que**
la tension d'électrodialyse appliquée au module d'électrodialyse (3) peut être inversée de temps en temps, la circulation de diluat et de concentrat dans le module d'électrodialyse (3) s'inversant aussi,
le dispositif de séparation présente un réservoir collecteur de concentrat (5) auquel peut être amené le concentrat sortant du module d'électrodialyse (3),
le dispositif de séparation présente un réservoir collecteur de produit (6) dans lequel le diluat peut être stocké temporairement avant d'être réinjecté dans le circuit de refroidissement primaire,
les cellules à électrodes du module d'électrodialyse (3) peuvent être rincées séparément de ses autres cellules et
le dispositif de séparation présente un accumulateur pour stocker temporairement du ⁷Li ou du ⁷LiOH, à partir duquel, en cas de besoin, en particulier en mode suivi de charge, du ⁷Li ou du ⁷LiOH peut être réinjecté dans le circuit de refroidissement primaire par inversion de polarité du module d'électrodialyse (3).

8. Circuit de refroidissement primaire selon la revendication 7, **caractérisé en ce que** le dispositif de séparation présente un réservoir collecteur de diluat (4) à partir duquel de l'eau de refroidissement prélevée du circuit de refroidissement primaire peut être amenée au module d'électrodialyse (3).

9. Circuit de refroidissement primaire selon l'une des revendications 7 à 8, **caractérisé en ce que** les membranes du module d'électrodialyse (3) sont constituées de films en matière plastique avec groupes ioniques incorporés.

10. Circuit de refroidissement primaire selon l'une des revendications 7 à 9, **caractérisé en ce que** le module d'électrodialyse (3) comprend une cellule multiple avec des membranes sélectives anioniques et cationiques couplées de manière alternante.

11. Circuit de refroidissement primaire selon l'une des revendications 7 à 10, **caractérisé en ce que** les conduites d'eau de refroidissement entre le circuit de refroidissement primaire et le module d'électrodialyse (3) et/ou les conduites dans le dispositif de séparation sont essentiellement réalisées en matière plastique.

12. Circuit de refroidissement primaire selon l'une des revendications 7 à 11, **caractérisé en ce que** le dispositif de séparation présente un étage de concentration du concentrat.
